(19) Europäisches Patentamt
European Patent Office
Office européen des brevets

(11) EP 1 141 039 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(21) Anmeldenummer: **99963322.5**

(22) Anmeldetag: **23.11.1999**

(51) Int Cl.[7]: **C08F 8/30**, A61L 15/00

(86) Internationale Anmeldenummer:
**PCT/EP1999/009003**

(87) Internationale Veröffentlichungsnummer:
**WO 2000/031153 (02.06.2000 Gazette 2000/22)**

(54) **VERFAHREN ZUR NACHVERNETZUNG VON HYDROGELEN MIT 2-OXOTETRAHYDRO-1,3-OXAZINEN**

METHOD FOR THE SECONDARY CROSS-LINKING OF HYDROGELS WITH 2-OXOTETRAHYDRO-1,3-OXAZINES

PROCEDE DE POST-RETICULATION D'HYDROGELS AVEC DES 2-OXOTETRAHYDRO-1,3-OXAZINES

(84) Benannte Vertragsstaaten:
**AT BE CH CY DE DK ES FI FR GB GR IE IT LI LU MC NL PT SE**

(30) Priorität: **26.11.1998 DE 19854573**

(43) Veröffentlichungstag der Anmeldung:
**10.10.2001 Patentblatt 2001/41**

(73) Patentinhaber: **BASF AKTIENGESELLSCHAFT**
**67056 Ludwigshafen (DE)**

(72) Erfinder:
- **RIEGEL, Ulrich**
  **D-60386 Frankfurt (DE)**
- **WEISMANTEL, Matthias**
  **D-63637 Jossgrund (DE)**
- **FRENZ, Volker**
  **D-55246 Mainz-Kostheim (DE)**
- **DANIEL, Thomas**
  **67165 Waldsee (DE)**
- **ENGELHARDT, Fritz**
  **Chesapeake, VA 23320 (US)**

(56) Entgegenhaltungen:
**WO-A-94/09043**
**FR-A- 2 304 630**
**US-A- 4 056 502**
**BE-A- 645 195**
**US-A- 3 364 181**
**US-A- 5 288 811**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 141 039 B1

Printed by Jouve, 75001 PARIS (FR)

## Beschreibung

Die vorliegende Erfindung betrifft ein Verfahren zur Gel- bzw. Oberflächennachvernetzung von wasserabsorbierenden Hydrogelen mit 2-Oxotetrahydro-1,3-oxazinen, die so erhältlichen Polymeren sowie ihre Verwendung in Hygieneartikeln, Verpackungsmaterialien und Nonwovens.

Hydrophile, hochquellfähige Hydrogele sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wäßrigen Flüssigkeiten quellbare Naturprodukte, wie beispielsweise Guarderivate. Solche Hydrogele werden als wäßrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Zur Verbesserung der Anwendungseigenschaften, wie z.B. Rewet in der Windel und absorbency under load (AUL), werden hydrophile, hochquellfähige Hydrogele im allgemeinen oberflächen- oder gelnachvernetzt. Diese Nachvernetzung erfolgt bevorzugt in wäßriger Gelphase oder als Oberflächennachvernetzung der gemahlenen und abgesiebten Polymerpartikel.

Dazu geeignete Vernetzer sind Verbindungen, die mindestens zwei Gruppen enthalten, die mit den Carobxylgruppen des hydrophilen Polymeren kovalente Bindungen bilden können. Geeignete Verbindungen sind beispielsweise Di- oder Polyglycidylverbindungen, wie Phosphonsäurediglycidylester, Alkoxysilylverbindungen, Polyaziridine, Polyamine oder Polyamidoamine, wobei die genannten Verbindungen auch in Mischungen untereinander verwendet werden können (siehe beispielsweise die EP-A-0 083 022, EP-A-0 543 303 und EP-A-0 530 438). Als Vernetzer geeignete Polyamidoamine sind insbesondere in der EP-A-0 349 935 beschrieben.

Ein wesentlicher Nachteil dieser Vernetzer ist deren hohe Reaktivität, da diese besondere Schutzvorkehrungen im Produktionsbetrieb erforderlich macht, um unerwünschte Nebeneffekte zu vermeiden. Ebenso besitzen die vorgenannten Vernetzer hautreizende Eigenschaften, was bei der Verwendung in Hygieneartikeln problematisch erscheint.

Als Vernetzer sind auch polyfunktionelle Alkohole bekannt. Beispielsweise lehren die EP-A-0 372 981, US-A-4 666 983 sowie US-A-5 385 983 die Verwendung von hydrophilen Polyalkoholen bzw. die Verwendung von Polyhydroxytensiden. Die Reaktion wird hiernach bei hohen Temperaturen von 120-250°C durchgeführt. Das Verfahren hat den Nachteil, daß die zur Vernetzung führende Veresterungsreaktion selbst bei diesen Temperaturen nur langsam abläuft.

Die ältere deutsche Patentanmeldung DE-A-19 807 502 beschreibt ein Verfahren zur Nachvernetzung mit 2-Oxazolidinonen.

Es bestand daher die Aufgabe, unter Verwendung relativ reaktionsträger, aber dennoch mit Carboxylgruppen reaktionsfähiger Verbindungen eine ebenso gute oder bessere Gel- bzw. Oberflächennachvernetzung zu erreichen. Diese Aufgabe ist so zu lösen, daß die Reaktionszeit möglichst kurz und die Reaktionstemperatur möglichst niedrig sind.

Überraschenderweise wurde nun gefunden, daß 2-Oxotetrahydro-1,3-oxazine als Vernetzer hervorragend zur Lösung dieser Aufgabe geeignet sind. Insbesondere kann die mittlere Reaktivität dieser Vernetzer durch Zugabe von anorganischen oder organischen sauren Katalysatoren gesteigert werden. Als Katalysatoren geeignet sind die bekannten anorganischen Mineralsäuren, deren saure Salze mit Alkalimetallen oder Ammonium, sowie deren entsprechender Anhydride. Geeignete organische Katalysatoren sind die bekannten Carbonsäuren, Sulfonsäuren sowie Aminosäuren.

Gegenstand der Erfindung ist ein Verfahren zur Gel- und/oder Oberflächennachvernetzung wasserabsorbierender Polymere, indem das Polymer mit einer Oberflächennachvernetzungslösung behandelt und während oder nach dem Behandeln durch Temperaturerhöhung nachvernetzt und getrocknet wird, das dadurch gekennzeichnet, daß der Vernetzer eine Verbindung der allgemeinen Formel I

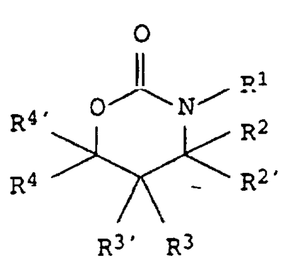

(I),

worin $R^1$ für Wasserstoff, $C_1$-$C_4$-Alkyl, $C_1$-$C_4$-Hydroxyalkyl, Trialkylsilyl oder Acetyl steht und $R^2$, $R^{2'}$, $R^3$, $R^{3'}$, $R^4$, $R^{4'}$ unabhängig voneinander Wasserstoff, $C_1$-$C_{12}$-Alkyl, $C_1$-$C_{12}$-Alkenyl oder $C_6$-$C_{12}$-Aryl bedeuten, gelöst in einem inerten Lösungsmittel enthält.

Bevorzugt zur Nachvernetzung und Trocknung ist dabei der Temperaturbereich zwischen 50 und 250°C, insbesondere 50-200°C, ganz besonders bevorzugt ist der Bereich zwischen 100-180°C. Die Aufbringung der Oberflächennachvernetzungslösung erfolgt bevorzugt durch Aufsprühen auf das Polymere in geeigneten Sprühmischern. Im Anschluß an das Aufsprühen wird das Polymerpulver thermisch getrocknet, wobei die Vernetzungsreaktion sowohl vor als auch während der Trocknung stattfinden kann. Bevorzugt ist das Aufsprühen einer Lösung des Vernetzers in Reaktionsmischern oder Misch- und Trocknungsanlagen wie beispielsweise Lödige-Mischer, BEPEX®-Mischer, NAUTA®-Mischer, SHUGGI®-Mischer oder PROCESSALL®. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner wie ein Hordentrockner, ein Drehrohrofen, oder eine beheizbare Schnecke. Es kann aber auch z.B. eine azeotrope Destillation als Trocknungsverfahren benutzt werden. Die bevorzugte Verweilzeit bei dieser Temperatur im Reaktionsmischer oder Trockner beträgt unter 60 min., besonders bevorzugt unter 30 min.

In einer bevorzugten Ausführungsform der Erfindung wird zur Beschleunigung der Reaktion ein saurer Katalysator der Oberflächennachvernetzungslösung zugesetzt. Als Katalysator im erfindungsgemäßen Verfahren sind alle anorganischen Säuren, deren korrespondierende Anhydride, bzw. organischen Säuren verwendbar. Beispiele sind Borsäure, Schwefelsäure, Iodwasserstoffsäure, Phosphorsäure, Weinsäure, Essigsäure und Toluolsulfonsäure. Insbesondere sind auch deren polymere Formen, Anhydride, sowie die sauren Salze der mehrwertigen Säuren geeignet. Beispiele hierfür sind Boroxid, Schwefeltrioxid, Diphosphorpentaoxid und Ammoniumdihydrogenphosphat.

Der Vernetzer wird in inerten Lösungsmitteln gelöst. Der Vernetzer wird dabei bevorzugt in einer Menge von 0,01 bis 5, insbesondere bevorzugt 0,01-1,0, vorzugsweise 0,05 bis 0,5 Gew.-%, bezogen auf das eingesetzte Polymer, verwendet. Als inertes Lösemittel bevorzugt ist Wasser sowie Gemische von Wasser mit ein- oder mehrwertigen Alkoholen. Es können jedoch alle mit Wasser unbegrenzt mischbaren organischen Lösemittel eingesetzt werden, die nicht selbst unter den Verfahrensbedingungen reaktiv sind. Sofern ein Alkohol/Wasser-Gemisch eingesetzt wird, beträgt der Alkoholgehalt dieser Lösung beispielsweise 10-90 Gew.-%, bevorzugt 30-70 Gew.-%, insbesondere 40-60 Gew.-%. Es können alle mit Wasser unbeschränkt mischbaren Alkohole eingesetzt werden, sowie Gemische mehrerer Alkohole (z.B. Methanol + Glycerin + Wasser). Die Alkoholgemische können die Alkohole in beliebigem Mischungsverhältnis enthalten. Besonders bevorzugt ist jedoch der Einsatz folgender Alkohole in wäßriger Lösung: Methanol, Ethanol, Isopropanol, Ethylenglykol und besonders bevorzugt 1,2-Propandiol sowie 1,3-Propandiol.

In einer weiteren bevorzugten Ausführungsform der Erfindung wird die Oberflächennachvernetzungslösung in einem Verhältnis von 1-20 Gew.-%, bezogen auf die Masse des Polymeren eingesetzt. Besonders bevorzugt ist eine Lösungsmenge von 0,5-10 Gew.-%, bezogen auf das Polymer.

Ein weiterer Gegenstand der Erfindung sind vernetzte wasserabsorbierende Polymere, die nach dem erfindungsgemäßen Verfahren erhältlich sind.

Die im erfindungsgemäßen Verfahren einzusetzenden hydrophilen, hochquellfähigen Hydrogele sind insbesondere Polymere aus (co)polymerisierten hydrophilen Monomeren, Pfropf(co)polymere von einem oder mehreren hydrophilen Monomeren auf eine geeignete Pfropfgrundlage, vernetzte Cellulose- oder Stärkeether oder in wäßrigen Flüssigkeiten quellbare Naturprodukte, wie beispielsweise Guarderivate. Bevorzugt handelt es sich bei dem zu verneztenden Polymer um ein Polymer, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden. Diese Hydrogele sind dem Fachmann bekannt und beispielsweise in der US-A-4 286 082, DE-C-27 06 135, US-A-4 340 706, DE-C-37 13 601, DE-C-28 40 010, DE-A-43 44 548, DE-A-40 20 780, DE-A-40 15 085, DE-A-39 17 846, DE-A-38 07 289, DE-A-35 33 337, DE-A-35 03 458, DE-A-42 44 548, DE-A-42 19 607, DE-A-40 21 847, DE-A-38 31 261, DE-A-35 11 086, DE-A-31 18 172, DE-A-30 28 043, DE-A-44 18 881, EP-A-0 801 483, EP-A-0 455 985, EP-A-0 467 073, EP-A-0 312 952, EP-A-0 205 874, EP-A-0 499 774, DE-A 26 12 846, DE-A-40 20 780, EP-A-0 205 674, US-A-5 145 906, EP-A-0 530 438, EP-A-0 670 073, US-A-4 057 521, US-A-4 062 817, US-A-4 525 527, US-A-4 295 987, US-A-5 011 892, US-A-4 076 663 oder US-A-4 931 497 beschrieben. Der Inhalt der vorstehend genannten Patentdokumente ist ausdrücklich Bestandteil der vorliegenden Offenbarung.

Zur Herstellung dieser hydrophilen, hochquellfähigen Hydrogele geeignete hydrophile Monomere sind beispielsweise polymerisationsfähige Säuren, wie Acrylsäure, Methacrylsäure, Vinylsulfonsäure, Vinylphosphonsäure, Maleinsäure einschließlich deren Anhydrid, Fumarsäure, Itaconsäure, 2-Acrylamido-2-methylpropansulfonsäure, 2-Acrylamido-2-methylpropanphosphonsäure sowie deren Amide, Hydroxyalkylester und aminogruppen- oder ammoniumgruppenhaltige Ester und Amide sowie die Alkalimetall- und/oder Ammoniumsalze der Säuregruppen enthaltenden Monomeren. Des weiteren eignen sich wasserlösliche N-Vinylamide wie N-Vinylformamid oder auch Diallyldimethyl-ammoniumchlorid. Bevorzugte hydrophile Monomere sind Verbindungen der allgemeinen Formel II

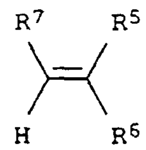 (II),

worin

R$^5$ Wasserstoff, Methyl oder Ethyl,

R$^6$ -COOR$^8$, Hydroxysulfonyl oder Phosphonyl, eine mit einem ($C_1$-$C_4$)-Alkanol veresterte Phosphonylgruppe oder eine Gruppe der Formel III

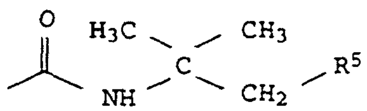 (III)

R$^7$ Wasserstoff, Methyl, Ethyl oder Carboxyl,

R$^8$ Wasserstoff, Amino-($C_1$-$C_4$)-alkyl, Hydroxy-($C_1$-$C_4$)-alkyl, Alkalimetall- oder Ammoniumion und

R$^9$ eine Sulfonylgruppe, eine Phosphonylgruppe oder eine Carboxylgruppe oder jeweils deren Alkalimetall- oder Ammoniumsalze, bedeuten.

Beispiele für $C_1$-$C_4$-Alkanole sind Methanol, Ethanol, n-Propanol, Isopropanol oder n-Butanol.
Besonders bevorzugte hydrophile Monomere sind Acrylsäure und Methacrylsäure, sowie deren Alkalimetall- oder Ammoniumsalze, z.B. Natriumacrylat, Kaliumacrylat oder Ammoniumacrylat.
Geeignete Pfropfgrundlagen für hydrophile Hydrogele, die durch Pfropfcopolymerisation olefinisch ungesättigter Säuren oder ihrer Alkalimetall- oder Ammoniumsalze erhältlich sind, können natürlichen oder synthetischen Ursprungs sein. Beispiele sind Stärke, Cellulose oder Cellulosederivate sowie andere Polysaccharide und Oligosaccharide, Polyalkylenoxide, insbesondere Polyethylenoxide und Polyethylenoxide und Polypropylenoxide, sowie hydrophile Polyester.
Geeignete Polyalkylenoxide haben beispielsweise die Formel IV

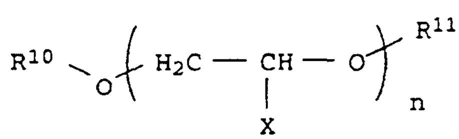 (IV),

worin

R$^{10}$ und R$^{11}$ unabhängig voneinander Wasserstoff, Alkyl, Alkenyl oder Aryl,

R$^{11}$ Wasserstoff oder Methyl und

n eine ganze Zahl von 1 bis 10.000 bedeuten.

R$^{10}$ und R$^{11}$ bedeuten bevorzugt Wasserstoff, ($C_1$-$C_4$)-Alkyl, ($C_2$-$C_6$)-Alkenyl oder Phenyl.
Bevorzugte Hydrogele sind insbesondere Polyacrylate, Polymethacrylate sowie die in der US-A-4 931 497, US-A-5 011 892 und US-A-5 041 496 beschriebene Pfropfpolymere.
Die hydrophilen, hochquellfähigen Hydrogele sind bevorzugt vernetzt, d.h. sie enthalten Verbindungen mit

mindestens zwei Doppelbindungen, die in das Polymernetzwerk einpolymerisiert sind. Geeignete Vernetzer sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, z.B. Butandiol- oder Ethylendiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A-0 3453 427 beschrieben sind. Besonders bevorzugt werden im erfindungsgemäßen Verfahren jedoch Hydrogele, die unter Verwendung von Polyallylethern als Vernetzer und durch saure Homopolymerisation von Acrylsäure hergestellt werden. Geeignete Vernetzer sind Pentaerythritoltri- und -tetraallylether, Polyethylenglykoldiallylether, Monoethylenglykoldiallylether, Glyceroldi- und Triallylether, Polyallylether auf Basis Sorbitol, sowie ethoxylierte Varianten davon.

Das wasserabsorbierende Polymer ist bevorzugt eine polymere Acrylsäure oder ein Polyacrylat. Die Herstellung dieses wasserabsorbierenden Polymeren kann nach einem aus der Literatur bekannten Verfahren erfolgen. Bevorzugt sind Polymere, die vernetzende Comonomere in Mengen von 0,001-10 mol-%, vorzugsweise 0,01-1 mol-% enthalten, ganz besonders bevorzugt sind jedoch Polymere, die durch radikalische Polymerisation erhalten wurden und bei denen ein mehrfunktioneller ethylenisch ungesättigter Radikalvernetzer verwendet wurde, der zusätzlich noch mindestens eine freie Hydroxylgruppe trägt (wie z.B. Pentaerythritoltriallylether oder Trimethylolpropandiallylether).

Die hydrophilen, hochquellfähigen Hydrogele können durch an sich bekannte Polymerisationsverfahren hergestellt werden. Bevorzugt ist die Polymerisation in wäßriger Lösung nach dem Verfahren der sogenannten Gelpolymerisation. Dabei werden beispielsweise 15 bis 50 gew.-%ige wäßrige Lösungen eines oder mehrerer hydrophiler Monomerer und gegebenenfalls einer geeigneten Pfropfgrundlage in Gegenwart eines Radikalinitiators, bevorzugt ohne mechanische Durchmischung unter Ausnutzung des Trommsdorff-Norrish-Effektes (Makromol. Chem. 1, 169 (1947)), polymerisiert. Die Polymerisationsreaktion kann im Temperaturbereich zwischen 0 und 150°C, vorzugsweise zwischen 10 und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden. zur Auslösung der Polymerisation können energiereiche elektromagnetische Strahlen oder die üblichen chemischen Polymerisationsinitiatoren herangezogen werden, z.B. organische Peroxide, wie Benzoylperoxid, tert.-Butylhydroperoxid, Methylethylketonperoxid, Cumolhydroperoxid, Azoverbindungen wie Azodiisobutyronitril sowie anorganische Peroxiverbindungen wie $(NH_4)_2S_2O_8 \cdot K_2S_2O_8$ oder $H_2O_2$. Sie können gegebenenfalls in Kombination mit Reduktionsmitteln wie Natriumhydrogensulfit und Eisen(II)-sulfat oder Redoxsystemen, welche als reduzierende Komponente eine aliphatische und aromatische Sulfinsäure, wie Benzolsulfinsäure und Toluolsulfinsäure oder Derivate dieser Säuren enthalten, wie Mannichaddukte aus Sulfinsäuren, Aldehyden und Aminoverbindungen, wie sie in der DE-A-1 301 566 beschrieben sind, verwendet werden. Durch mehrstündiges Nachheizen der Polymerisatgele im Temperaturbereich 50 bis 130°C, vorzugsweise 70 bis 100°C, können die Qualitätseigenschaften der Polymerisate noch verbessert werden.

Die erhaltenen Gele werden beispielsweise zu 0-100 mol-%, bevorzugt 25-100 mol-% und besonders bevorzugt zu 50-85 mol-%, bezogen auf eingesetztes Monomer neutralisiert, wobei die üblichen Neutralisationsmittel verwendet werden können, bevorzugt Alkalimetallhydroxide oder -oxide, besonders bevorzugt jedoch Natriumhydroxid, Natriumcarbonat und Natriumhydrogencarbonat.

Üblicherweise wird die Neutralisation durch Einmischung des Neutralisationsmittels als wäßrige Lösung oder bevorzugt auch als Feststoff erreicht. Das Gel wird hierzu mechanisch zerkleinert, z.B. mittels eines Fleischwolfes und das Neutralisationsmittel wird aufgesprüht, übergestreut oder aufgegossen, und dann sorgfältig untergemischt. Dazu kann die erhaltene Gelmasse noch mehrmals zur Homogenisierung gewolft werden. Die neutralisierte Gelmasse wird dann mit einem Band- oder Walzentrockner getrocknet bis der Restfeuchtegehalt vorzugsweise unter 10 Gew.-%, insbesondere unter 5 Gew.-% liegt. Das getrocknete Hydrogel wird hiernach gemahlen und gesiebt, wobei zur Mahlung üblicherweise Walzenstühle, Stiftmühlen oder Schwingmühlen eingesetzt werden können. Die Partikelgröße des gesiebten Hydrogels liegt vorzugsweise im Bereich 45-1000 μm, besonders bevorzugt bei 45-850 μm und ganz besonders bevorzugt bei 200-850 μm.

Zur Bestimmung der Güte der Oberflächennachvernetzung wir das getrocknete Hydrogel mit den Testmethoden geprüft, die nachfolgend beschrieben sind:

Methoden:

1) Zentrifugenretentionskapazität (CRC):

Bei dieser Methode wird die freie Quellbarkeit des Hydrogels im Teebeutel bestimmt. Es werden ca. 0,200 g getrocknetes Hydrogel in einen Teebeutel eingeschweißt (Format: 60 mm x 60 mm, Dexter 1234 T-Papier) und für 30 min in eine 0,9 gew.-%ige Kochsalzlösung eingeweicht. Anschließend wird der Teebeutel 3 min in einer handelsüblichen Wäschezentrifuge (Bauknecht WS 130, 1400 U/min Korbdurchmesser 230 mm) geschleudert. Die Bestimmung der

aufgenommenen Flüssigkeitsmenge geschieht durch Auswiegen des zentrifugierten Teebeutels. Zur Berücksichtigung der Aufnahmekapazität des Teebeutels selbst wird ein Blindwert bestimmt (Teebeutel ohne Hydrogel), welcher von der Auswaage (Teebeutel mit gequollenem Hydrogel) abgezogen wird.

$$\text{Retention CRC \{g/g\}} = (\text{Auswaage Teebeutel} - \text{Blindwert} - \text{Einwaage Hydrogel}) \div \text{Einwaage Hydrogel}.$$

2) Absorption unter Druck (0,3/0,5/0,7 psi):

Bei der Absorption unter Druck werden 0,900 g trockenen Hydrogels gleichmäßig auf dem Siebboden einer Meßzelle verteilt. Die Meßzelle besteht aus einem Plexiglaszylinder (Höhe = 50 mm, Durchmesser = 60 mm), auf den als Boden ein Sieb aus Stahlgewebe (Maschenweite 36 micron bzw. 400 mesh) aufgeklebt ist. Über das gleichmäßig verteilte Hydrogel wird eine Abdeckplatte gelegt und mit einem entsprechenden Gewicht belastet. Die Zelle wird dann auf ein Filterpapier(S&S 589 Schwarzband, Durchmesser = 90 mm) gestellt, welches auf einer porösen Glasfilterplatte liegt, diese Filterplatte liegt in einer Petrischale (Höhe = 30 mm, Durchmesser = 200 mm), welche soviel 0,9 gew.-%ige Kochsalzlösung enthält, daß der Flüssigkeitsspiegel zu Beginn des Experiments identisch mit der Oberkante der Glasfritte ist. Man läßt das Hydrogel dann für 60 min die Salzlösung absorbieren. Dann nimmt man die komplette Zelle mit dem gequollenen Gel von der Filterplatte und wiegt die Apparatur nach Entfernen des Gewichts zurück.
Die Absorption unter Druck (AUL = Absorbency Under Load) wird wie folgt berechnet:

$$\text{AUL [g/g]} = (Wb - Wa) \div Ws$$

wobei
Wb die Masse der Apparatur + Gel nach dem Quellen,
Wa die Masse der Apparatur + Einwaage vor dem Quellen,
Ws die Einwaage an trockenem Hydrogel ist.
Die Apparatur besteht aus Meßzylinder + Abdeckplatte.

Beispiele 1a und 1b

Grundpolymer:

In einem 40 l-Plastikeimer werden 6,9 kg reine Acrylsäure mit 23 kg Wasser verdünnt. Zu dieser Lösung fügt man 45 g Pentaerythritoltriallylether unter Rühren hinzu und inertisiert den verschlossenen Eimer durch Durchleiten von Stickstoff. Die Polymerisation wird dann durch Zugabe von ca. 400 mg Wasserstoffperoxid und 200 mg Ascorbinsäure-gestartet. Nach Beendigung der Reaktion wird das Gel mechanisch zerkleinert und mit soviel Natronlauge versetzt, bis ein Neutralisationsgrad von 75 mol-%, bezogen auf die eingesetzte Acrylsäure, erreicht wird. Das neutralisierte Gel wird dann auf einem Walzentrockner getrocknet, mit einer Stiftmühle gemahlen, und schließlich abgesiebt. Dies ist das in den nachfolgenden Beispielen verwendete Grundpolymer.
Das Grundpolymer wird in einem Waring-Labormischer mit Vernetzer-Lösung folgender Zusammensetzung besprüht: 4 Gew.-% Methanol, 6 Gew.-% Wasser und 0,20 Gew.-% 2-Oxotetrahydro-1,3-oxazin, bezogen auf eingesetztes Polymer. Anschließend wird ein Teil des feuchten Produkts bei 175°C für 60 min und der Rest bei 175°C für 90 min im Umlufttrockenschrank getempert. Das getrocknete Produkt wird bei 850 micron abgesiebt, um Klumpen zu entfernen.

Beispiel 2a und 2b

Grundpolymer gemäß Beispiel 1 wird in einem Waring-Labormischer mit Vernetzer-Lösung besprüht. Die Lösung ist dabei so zusammengesetzt, daß folgende Dosierung, bezogen auf eingesetztes Grundpolymer, erreicht wird: 0,40 Gew.-% 2-Oxotetrahydro-1,3-oxazin, 4 Gew.-% Propylenglykol und 6 Gew.-% Wasser. Jeweils ein Teil des feuchten Polymers wird dann bei 165°C für 60 bzw. 90 min getrocknet.

Beispiel 3

Grundpolymer gemäß Beispiel 1 wird in einem Waring-Labormischer mit Vernetzer-Lösung besprüht. Die Lösung ist dabei so zusammengesetzt, daß folgende Dosierung, bezogen auf eingesetztes Grundpolymer erreicht wird: 0,30 Gew.-% 2-Oxotetrahydro-1,3-oxazin, 3 Gew.-% 1,2-Propandiol, 7 Gew.-% Wasser und 0,2 Gew.-% Borsäure.

Das feuchte Polymer wird dann bei 175°C für 60 min getrocknet.

Beispiel 4

Grundpolymer gemäß Beispiel 1 wird in einem Waring-Labormischer mit Vernetzer-Lösung besprüht. Die Lösung ist dabei so zusammengesetzt, daß folgende Dosierung, bezogen auf eingesetztes Grundpolymer erreicht wird: 0,40 Gew.-% N-Methyl-2-oxotetrahydro-1,3-oxazin, 4 Gew.-% Ethanol, 6 Gew.-% Wasser und 0,2 Gew.-% Ammoniumdihydrogenphosphat. Das feuchte Polymer wird dann bei 175°C für 60 min getrocknet.

Die gemäß obigen Beispielen hergestellten Polymere wurden getestet und die Ergebnisse sind in nachfolgender Tabelle 1 zusammengefaßt:

Tabelle 1

| | Trockn.-Temp. | Trockn.-Zeit | Vernetzer | Katalysator | Lösemittel | CRC (g/g) | AUL 0,3 psi (g/g) | AUL 0,7 psi (4826,5 Pa) (g/g) |
|---|---|---|---|---|---|---|---|---|
| Beispiel 1 Grundpolymer nicht oberflächenvernetzt | - | - | - | - | - | 42 | 10 | 9 |
| Beispiel 1a | 175°C | 60 min | 0,20 % Vernetzer 1 | - | 4 % MeOH + 6 % $H_2O$ | 40 | 31 | 9 |
| Beispiel 1b | 175°C | 90 min | 0,20 % Vernetzer 1 | - | 4 % MeOH + 6 % $H_2O$ | 38 | 33 | 13 |
| Beispiel 2a | 165°C | 60 min | 0,40 % Vernetzer 1 | - | 4 % PG + 6 % $H_2O$ | 36 | 35 | 18 |
| Beispiel 2b | 165°C | 90 min | 0,40 % Vernetzer 1 | - | 4 % PG + 6 % $H_2O$ | 32 | 33 | 24 |
| Beispiel 3 | 175°C | 60 min | 0,30 % Vernetzer 1 | 0,2 % $H_3BO_3$ | 3 % PG + 7 % $H_2O$ | 35 | 34 | 20 |
| Beispiel 4 | 175°C | 60 min | 0,40 % Vernetzer 2 | 0,2 % $NH_4H_2PO_4$ | 4 % EtOH + 6 % $H_2O$ | 31 | 32 | 25 |

Vernetzer 1: 2-Oxotetrahydro-1,3-oxazin

Vernetzer 2: N-Methyl-2-oxotetrahydro-1,3-oxazin

Alle Prozentangaben sind Gewichtsprozente bezogen auf eingesetztes Polymer. Trocknungstemperatur und -zeit beziehen sich hierbei auf die Temperung des mit Oberflächennachvernetzungslösung besprühten Grundpolymers.

**Patentansprüche**

1. Verfahren zur Gel- und/oder Oberflächennachvernetzung wasserabsorbierender Polymere, indem das Polymere mit einer Oberflächennachvernetzungslösung behandelt und während oder nach dem Behandeln durch Temperaturerhöhung nachvernetzt und getrocknet wird, **dadurch gekennzeichnet, daß** der Vernetzer eine Verbindung der Formel I

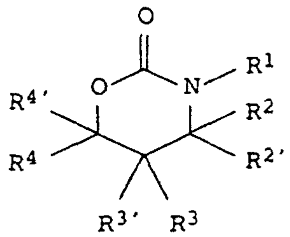

(I),

worin $R^1$ für Wasserstoff, $C_1$-$C_4$-Alkyl, $C_1$-$C_4$-Hydroxyalkyl, Trialkylsilyl oder Acetyl steht und $R^2$, $R^{2'}$, $R^3$, $R^{3'}$, $R^4$, $R^{4'}$ unabhängig voneinander Wasserstoff, $C_1$-$C_{12}$-Alkyl, $C_1$-$C_{12}$-Alkenyl oder $C_6$-$C_{12}$-Aryl bedeuten, gelöst in einem inerten Lösungsmittel enthält.

2. Verfahren gemäß Anspruch 1, **dadurch gekennzeichnet, daß** es sich bei dem zu vernetzenden Polymer um ein Polymer handelt, das Struktureinheiten enthält, die sich von Acrylsäure oder deren Estern ableiten, oder die durch Pfropfcopolymerisation von Acrylsäure oder Acrylsäureestern auf eine wasserlösliche Polymermatrix erhalten wurden.

3. Verfahren nach Anspruch 1 oder 2, **dadurch gekennzeichnet, daß** zur Oberflächennachvernetzung ein Katalysator verwendet wird, der eine Säure oder deren Anhydrid umfaßt.

4. Verfahren nach Anspruch 3, **dadurch gekennzeichnet, daß** es sich bei der Säure um Borsäure, Schwefelsäure, Iodwasserstoffsäure, Phosphorsäure, Weinsäure, Essigsäure oder Toluolsulfonsäure, sowie deren polymere Formen, sauren Salze oder Anhydride handelt.

5. Verfahren nach einem oder mehreren der Ansprüche 1 bis 4, **dadurch gekennzeichnet, daß** das inerte Lösemittel Wasser oder eine Mischung von Wasser mit mono- oder mehrfachfunktionellen Alkoholen mit 10 bis 90 Gew.-% Alkohol ist.

6. Verfahren nach einem oder mehreren der Ansprüche 1 bis 5, **dadurch gekennzeichnet, daß** der Vernetzer in einer Menge von 0,01 bis 5 Gew.-%, bezogen auf das Gewicht des Polymeren verwendet wird.

7. Wasserabsorbierende Polymere, erhältlich gemäß dem Verfahren der Ansprüche 1 bis 6.

8. Verwendung der gemäß Anspruch 7 erhältlichen Polymere in Hygieneartikeln, Verpackungsmaterialien und in Nonowovens.

## Claims

1. The process for the gel and/or surface postcrosslinking of water-absorbent polymers by the polymer being treated with a surface postcrosslinking solution and being postcrosslinked and dried during and after the treatment by raising the temperature, wherein the crosslinker comprises a compound of the formula I

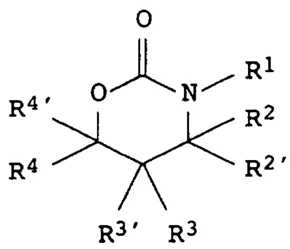

(I),

where $R^1$ is hydrogen, $C_1$-$C_4$-alkyl, $C_1$-$C_4$-hydroxyalkyl, trialkylsilyl or acetyl and $R^2$, $R^{2'}$, $R^3$, $R^{3'}$, $R^4$, $R^{4'}$ are each independently hydrogen, $C_1$-$C_{12}$-alkyl, $C_1$-$C_{12}$-alkenyl or $C_6$-$C_{12}$-aryl, dissolved in an inert solvent.

2. The process of claim 1, wherein the polymer to be crosslinked is a polymer containing structural units derived from acrylic acid or esters thereof or obtained by graft copolymerization of acrylic acid or acrylic esters onto a water-soluble polymer matrix.

3. The process of claim 1 or 2, wherein surface postcrosslinking is effected using a catalyst comprising an acid or anhydride thereof.

4. The process of claim 3, wherein the acid is boric acid, sulfuric acid, hydroiodic acid, phosphoric acid, tartaric acid, acetic acid or toluenesulfonic acid or polymeric forms, acidic salts or anhydrides thereof.

5. The process of one or more of claims 1 to 4, wherein the inert solvent is water or a mixture of water with mono- or polyhydric alcohols comprising from 10 to 90% by weight of alcohol.

6. The process of one or more of claims 1 to 5, wherein the crosslinker is used in an amount of from 0.01 to 5% by weight, based on the weight of the polymer.

7. Water-absorbent polymer obtainable by the process of claims 1 to 6.

8. The use of the polymer obtainable as per claim 7 in hygiene articles, packaging materials and nonwovens.

## Revendications

1. Procédé de postréticulation de gels et/ou de surfaces de polymère absorbant l'eau, dans lequel le polymère est traité par une solution de postréticulation de surface et est, pendant ou après le traitement, postréticulé et séché par une augmentation de température, **caractérisé en ce que** l'agent de réticulation contient un composé de la formule I :

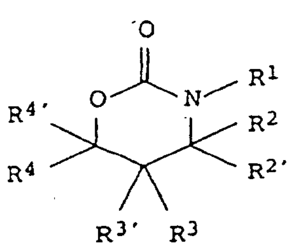

(I)

dans laquelle $R^1$ représente de l'hydrogène, de l'alkyle en $C_1$-$C_4$, de l'hydroxyalkyle en $C_1$-$C_4$, du trialkylsilyle ou de l'acétyle, et $R^2$, $R^{2'}$, $R^3$, $R^{3'}$, $R^4$, $R^{4'}$ représentent indépendamment l'un de l'autre de l'hydrogène, de l'alkyle en $C_1$-$C_{12}$, de l'alcényle en $C_1$-$C_{12}$ ou de l'aryle en $C_6$-$C_{12}$, en solution dans un solvant inerte.

**2.** Procédé suivant la revendication 1, **caractérisé en ce que**, pour ce qui concerne le polymère à réticuler, il s'agit d'un polymère qui contient des unités de structure qui dérivent d'acide acrylique ou de ses esters, ou qui ont été obtenues par copolymérisation de greffage d'acide acrylique ou d'esters d'acide acrylique sur une matrice polymère soluble dans l'eau.

**3.** Procédé suivant l'une des revendications 1 et 2, **caractérisé en ce que**, pour la postréticulation de surface, on utilise un catalyseur qui comprend un acide ou son anhydride.

**4.** Procédé suivant la revendication 3, **caractérisé en ce que**, pour ce qui concerne l'acide, il s'agit d'acide borique, d'acide sulfurique, d'acide iodhydrique, d'acide phosphorique, d'acide tartrique, d'acide acétique ou d'acide toluènesulfonique, ainsi que de leurs formes polymères, de leurs sels acides ou de leurs anhydrides.

**5.** Procédé suivant une ou plusieurs des revendications 1 à 4, **caractérisé en ce que** le solvant inerte est de l'eau ou un mélange d'eau avec des alcools monofonctionnels ou plurifonctionnels comportant 10 à 90% en poids d'alcool.

**6.** Procédé suivant une ou plusieurs des revendications 1 à 5, **caractérisé en ce que** l'agent de réticulation est utilisé en une quantité de 0,01 à 5% en poids, par rapport au poids du polymère.

**7.** Polymère absorbant l'eau, que l'on peut obtenir suivant le procédé selon l'une des revendications 1 à 6.

**8.** Utilisation des polymères que l'on peut obtenir suivant la revendication 7, dans des articles d'hygiène, des matières d'emballage et des non-tissés.